# EUROPEAN PATENT APPLICATION

(11) **EP 4 797 162 A1**
(43) Date of publication of application: **26.08.2026**
(21) Application number: 24892943.2
(22) Date of filing: 27.08.2024
(51) Int. Cl.: G06N 3/096

(54) **MODEL TRAINING METHOD, MULTIMEDIA DATA CLASSIFICATION METHOD, AND RELATED APPARATUS**

(30) Priority: 22.11.2023 CN 202311577190
(71) Applicant: HUAWEI TECHNOLOGIES CO., LTD., Shenzhen 518129 (CN)
(72) Inventor: ZHU, Mingjian, Shenzhen, Guangdong 518129 (CN); CHEN, Hanting, Shenzhen, Guangdong 518129 (CN); HUANG, Mouxiao, Shenzhen, Guangdong 518129 (CN); LI, Wei, Shenzhen, Guangdong 518129 (CN); HU, Hailin, Shenzhen, Guangdong 518129 (CN); HU, Jie, Shenzhen, Guangdong 518129 (CN); WANG, Yunhe, Shenzhen, Guangdong 518129 (CN)
(74) Representative: Grünecker Patent- und Rechtsanwälte PartG mbB
(86) International application number: PCT/CN2024/114801
(87) International publication number: WO 2025/107784

(57) **Abstract**

A model training method and a multimedia data classification method are provided, applied to the field of artificial intelligence technologies. In the model training method, extracted multimedia data is separately input into a teacher network and a student network, and the student network is trained based on a difference between a feature output by the teacher network and a feature output by the student network, so that the student network can output a feature that is similar to an output feature of the teacher network when processing non-AI-generated multimedia data, and output a feature that is greatly different from an output feature of the teacher network when processing AI-generated multimedia data. To be specific, in a training process of the student network, a training focus is targeted to expand an output difference between the student network and the teacher network when real multimedia data and the AI-generated multimedia data are processed. This allows a resulting student network to effectively handle various types of AI-generated multimedia data, and improves accuracy of identifying AI-generated multimedia data.

## Description

This application claims priority to Chinese Patent Application No. 202311577190.9, filed with the China National Intellectual Property Administration on November 22, 2023 and entitled "MODEL TRAINING METHOD, MULTIMEDIA DATA CLASSIFICATION METHOD, AND RELATED APPARATUS", which is incorporated herein by reference in its entirety.

### TECHNICAL FIELD

This application relates to the field of artificial intelligence (Artificial Intelligence, AI) technologies, and in particular, to a model training method, a multimedia data classification method, and a related apparatus.

### BACKGROUND

With the development of AI technologies, more AI models play an important role in people's life. For example, an image classification model can be used to categorize photos on smartphones, and a speech recognition model can provide functions like human-machine conversation or voice remote control. However, although the AI models bring convenience to people's life, the AI models have potential negative impact on society.

Specifically, current AI generation models like an image generation model and a text generation model can generate realistic images or text based on human instructions. The generated images or text are exploited to create malicious fake news. For example, the image generation model is used to generate earthquake or tsunami images for a specified place. These images are used to spread malicious fake news online, inciting social panic.

To mitigate the negative impact of AI-generated images on society, related technologies use classification models to identify the AI-generated images. These models are trained using real images and AI-generated images as training sets. However, these models in related technologies exhibit low accuracy when categorizing images generated by unknown generators (AI-generated images not included in the training set), making it difficult to accurately identify the AI-generated images in some scenarios.

### SUMMARY

This application provides a model training method, to improve accuracy of identifying AI-generated multimedia data by a trained model.

A first aspect of this application provides a model training method, used to train a model for identifying a multimedia data type in the AI field. The model training method includes: first, obtaining multimedia data and performing extraction to obtain a feature of the multimedia data, where the multimedia data is training data in a training set, and extracting the feature of the multimedia data may be: performing feature extraction on the multimedia data by using a pre-trained feature extraction network, or may be: converting the multimedia data into a feature matrix that can be used as an input of a neural network;
then, separately inputting the feature of the multimedia data into a teacher network and a student network, to obtain a first feature output by the teacher network and a second feature output by the student network, where both the teacher network and the student network may be neural networks such as deep neural networks, attention networks (for example, transformer networks), or convolutional neural networks that can perform feature processing on the feature of the multimedia data; the teacher network is used to guide training of the student network; and in a training process of the student network, a parameter of the teacher network is fixed; and
then, training the student network based on a difference value between the first feature output by the teacher network and the second feature output by the student network, where the difference value is used to obtain a classification result of the multimedia data, and the classification result indicates whether the multimedia data is AI-generated, and
a training objective of the student network is to reduce a difference between a feature output by the student network and a feature output by the teacher network when non-AI-generated multimedia data is processed, and increase a difference between a feature output by the student network and a feature output by the teacher network when AI-generated multimedia data is processed.

In other words, when an input of the teacher network and the student network is a feature of the non-AI-generated multimedia data, during training, the student network needs to reduce the difference between the feature output by the student network and the feature output by the teacher network. When an input of the teacher network and the student network is a feature of the AI-generated multimedia data, during training, the student network needs to increase the difference between the feature output by the student network and the feature output by the teacher network.

In this solution, extracted multimedia data is separately input into the teacher network and the student network, and the student network is trained based on a difference between a feature output by the teacher network and a feature output by the student network, so that the student network can output a feature that is similar to an output feature of the teacher network when processing the non-AI-generated multimedia data, and output a feature that is greatly different from an output feature of the teacher network when processing the AI-generated multimedia data. To be specific, the student network and the teacher network are jointly used as a detector of the multimedia data. An output of the detector is finally used to determine the classification result of the multimedia data, and a difference value between an output of the student network and an output of the teacher network is the output of the detector. In a training process of the detector, a training focus is targeted to expand an output difference of the detector when real multimedia data and the AI-generated multimedia data are processed. This allows a resulting detector to effectively handle various types of AI-generated multimedia data, and improves accuracy of identifying AI-generated multimedia data.

In a possible implementation, the classification result obtained based on the difference value specifically indicates a probability that the multimedia data is AI-generated and a probability that the multimedia data is not AI-generated, and the probability that the multimedia data is AI-generated is positively correlated with the difference value.

To be specific, subsequent classification of the multimedia data is performed based on a difference value between a feature output by the teacher network and a feature output by the student network, and different classification results may be obtained for different difference values. In addition, a larger difference value between the feature output by the teacher network and the feature output by the student network indicates a higher probability that the multimedia data is AI-generated; and a smaller difference value between the feature output by the teacher network and the feature output by the student network indicates a lower probability that the multimedia data is AI-generated.

In this solution, a representation range of the non-AI-generated multimedia data is usually limited (for example, a non-AI-generated image usually conforms to common sense of physics), and a representation range of the AI-generated multimedia data is infinite (for example, all sorts of imaginative images can be generated through AI). Therefore, the probability that the multimedia data is AI-generated is set to be positively correlated with a difference value between an output of the student network and an output of the teacher network, so that it can be ensured that the student network can learn a feature similar to an output feature of the teacher network when dealing with various types of non-AI-generated multimedia data, to ensure that multimedia data classification can be implemented subsequently based on the difference between the output of the student network and the output of the teacher network, and ensure feasibility of the solution.

In a possible implementation, there may be a plurality of different manners in a process of extracting the feature of the multimedia data.

When the multimedia data is not AI-generated, the multimedia data is input into a feature extraction network, to obtain the feature of the multimedia data output by the feature extraction network. To be specific, the non-AI-generated multimedia data is input into the feature extraction network to obtain a feature through extraction. The feature is then immediately input into the teacher network and the student network. This is equivalent to a case in which an input of both the teacher network and the student network is an output of the feature extraction network.

Alternatively, when the multimedia data is AI-generated, the multimedia data is input into the feature extraction network, and a feature output by the feature extraction network is input into a feature enhancement network, to obtain the feature of the multimedia data output by the feature enhancement network. To be specific, the AI-generated multimedia data is input into the feature extraction network to obtain a feature through extraction, and then, the feature is input into the feature enhancement network to perform feature enhancement, and then input into the teacher network and the student network. This is equivalent to a case in which an input of both the teacher network and the student network is an output of the feature enhancement network.

In this solution, for the AI-generated multimedia data, the feature enhancement network is provided after the feature extraction network, so that feature enhancement can be performed on a feature of the AI-generated multimedia data. This is equivalent to a case in which AI generation processing is performed again based on an original feature, to obtain a feature of the AI-generated multimedia data of more types. It is ensured that the student network can learn as many features of the AI-generated multimedia data as possible in a training phase, and generalization of the student network is improved.

In a possible implementation, the student network and the feature enhancement network are alternately trained in a training process of the student network. In addition, a training objective of the feature enhancement network is to reduce a difference between a feature output by the student network and a feature output by the teacher network. For example, after one round of iterative training performed on the student network based on a part or all of training data is completed, one round of iterative training is performed on the feature enhancement network based on a part or all of training data. After one round of iterative training performed on the feature enhancement network is completed, training on the student network continues to be performed, and so on, until a plurality of rounds of training on the student network and the feature enhancement network are completed.

In other words, the feature enhancement network is trained, so that the feature enhancement network can generate various features based on a feature of original AI-generated multimedia data. In addition, when these features are used as inputs of the student network and the teacher network, it is difficult for the student network to output a feature that is distinct enough from the output feature of the teacher network. In this way, the student network is subsequently trained to output a feature that is greatly different from the output feature of the teacher network when dealing with various types of AI-generated multimedia data, so as to ensure that the student network can also have high performance in an inference phase when dealing with multimedia data generated by various unknown generators.

In a possible implementation, the teacher network is a pre-trained neural network, and a training objective of the teacher network in a training phase is to reduce a difference between a classification result obtained based on a feature output by the teacher network and a real classification result.

In other words, in the training phase of the teacher network, a feature output by the teacher network is further used to perform classification (for example, perform classification on the feature output by the teacher network based on a classifier) and obtain a corresponding classification result. In this way, when the teacher network is trained, a training objective in the training phase is set to reduce the difference between the classification result obtained based on the feature output by the teacher network and the real classification result, so that for the non-AI-generated multimedia data and the AI-generated multimedia data, the teacher network can output features that are greatly different, and it is ensured that a feature of the non-AI-generated multimedia data and a feature of the AI-generated multimedia data that are output by the teacher network are distinct enough, to improve accuracy of the student network obtained through subsequent training.

In a possible implementation, after training of the student network is completed, the feature of the multimedia data may be input into a trained student network, to obtain a third feature; then a difference value between the first feature and the third feature is input into a classification network, to obtain a classification result output by the classification network, where the classification result output by the classification network indicates whether the multimedia data is AI-generated; and finally, the classification network is trained based on the classification result output by the classification network and a real classification result corresponding to the multimedia data, where a training objective of the classification network is to reduce a difference between the classification result output by the classification network and the real classification result.

In other words, an input of the classification network is a difference value between the feature output by the teacher network and a feature output by the trained student network, and an output of the classification network is the classification result of multimedia data, that is, the classification network is configured to determine the classification result based on the difference value. After training of both the teacher network and the student network is completed, the classification network may be trained based on the teacher network and the student network that have completed training, so that the classification network can output an accurate classification result based on the difference value.

In a possible implementation, the multimedia data is any one of the following data: image, video, text, or voice.

A second aspect of this application provides a multimedia data classification method, including: obtaining multimedia data and performing extraction to obtain a feature of the multimedia data; separately inputting the feature of the multimedia data into a teacher network and a student network, to obtain a first feature output by the teacher network and a second feature output by the student network; and determining a difference value between the first feature and the second feature, and inputting the difference value into a classification network, to obtain a classification result output by the classification network, where the classification result indicates whether the multimedia data is AI-generated.

In this solution, extracted multimedia data is separately input into the teacher network and the student network, and classification of the multimedia data is performed based on a difference between a feature output by the teacher network and a feature output by the student network, so that the classification network no longer directly performs classification based on the feature of the multimedia data, but performs classification based on a feature difference value that facilitates easier classification, to improve accuracy of identifying AI-generated multimedia data.

In a possible implementation, the classification result specifically indicates a probability that the multimedia data is AI-generated and a probability that the multimedia data is not AI-generated, and the probability that the multimedia data is AI-generated is positively correlated with the difference value.

In a possible implementation, the teacher network is a pre-trained neural network, the student network is trained under guidance of the teacher network, and a training objective of the student network in a training phase is to reduce a difference between a feature output by the student network and a feature output by the teacher network when non-AI-generated multimedia data is processed, and increase a difference between a feature output by the student network and a feature output by the teacher network when AI-generated multimedia data is processed.

In a possible implementation, a training objective of the teacher network in a training phase is to reduce a difference between a classification result obtained based on a feature output by the teacher network and a real classification result.

In a possible implementation, the multimedia data is any one of the following data: image, video, text, or voice.

A third aspect of this application provides a model training apparatus, including: an extraction module, configured to obtain multimedia data and perform extraction to obtain a feature of the multimedia data, where the multimedia data is training data in a training set; a processing module, configured to separately input the feature of the multimedia data into a teacher network and a student network, to obtain a first feature output by the teacher network and a second feature output by the student network; and a training module, configured to train the student network based on a difference value between the first feature and the second feature, where the difference value is used to obtain a classification result of the multimedia data, the classification result indicates whether the multimedia data is AI-generated, and a training objective of the student network is to reduce a difference between a feature output by the student network and a feature output by the teacher network when non-AI-generated multimedia data is processed, and increase a difference between a feature output by the student network and a feature output by the teacher network when AI-generated multimedia data is processed.

In a possible implementation, the classification result specifically indicates a probability that the multimedia data is AI-generated and a probability that the multimedia data is not AI-generated, and the probability that the multimedia data is AI-generated is positively correlated with the difference value.

In a possible implementation, the extraction module is specifically configured to: when the multimedia data is generated not through the AI, input the multimedia data into a feature extraction network, to obtain the feature of the multimedia data output by the feature extraction network; or when the multimedia data is AI-generated, input the multimedia data into the feature extraction network, and input a feature output by the feature extraction network into a feature enhancement network, to obtain the feature of the multimedia data output by the feature enhancement network.

In a possible implementation, the training module is further configured to alternately train the student network and the feature enhancement network in a training process of the student network, where a training objective of the feature enhancement network is to reduce a difference between a feature output by the student network and a feature output by the teacher network.

In a possible implementation, the teacher network is a pre-trained neural network, and a training objective of the teacher network in a training phase is to reduce a difference between a classification result obtained based on a feature output by the teacher network and a real classification result.

In a possible implementation, the training module is further configured to: after training of the student network is completed, input the feature of the multimedia data into a trained student network, to obtain a third feature; input a difference value between the first feature and the third feature into a classification network, to obtain a classification result output by the classification network, where the classification result output by the classification network indicates whether the multimedia data is AI-generated; and train the classification network based on the classification result output by the classification network and a real classification result corresponding to the multimedia data, where a training objective of the classification network is to reduce a difference between the classification result output by the classification network and the real classification result.

In a possible implementation, the multimedia data is any one of the following data: image, video, text, or voice.

A fourth aspect of this application provides a multimedia data classification apparatus, including: an obtaining module, configured to obtain multimedia data and perform extraction to obtain a feature of the multimedia data; and a processing module, configured to separately input the feature of the multimedia data into a teacher network and a student network, to obtain a first feature output by the teacher network and a second feature output by the student network. The processing module is further configured to: determine a difference value between the first feature and the second feature, and input the difference value into a classification network, to obtain a classification result output by the classification network, where the classification result indicates whether the multimedia data is AI-generated.

In a possible implementation, the classification result specifically indicates a probability that the multimedia data is AI-generated and a probability that the multimedia data is not AI-generated, and the probability that the multimedia data is AI-generated is positively correlated with the difference value.

In a possible implementation, the teacher network is a pre-trained neural network, the student network is trained under guidance of the teacher network, and a training objective of the student network in a training phase is to reduce a difference between a feature output by the student network and a feature output by the teacher network when non-AI-generated multimedia data is processed, and increase a difference between a feature output by the student network and a feature output by the teacher network when AI-generated multimedia data is processed.

In a possible implementation, a training objective of the teacher network in a training phase is to reduce a difference between a classification result obtained based on a feature output by the teacher network and a real classification result.

In a possible implementation, the multimedia data is any one of the following data: image, video, text, or voice.

A fifth aspect of this application provides a model training apparatus. The apparatus may include a processor; the processor is coupled to a memory; the memory stores program instructions; and when the program instructions stored in the memory are executed by the processor, the method according to any one of the first aspect or the implementations of the first aspect is implemented. For steps that are performed by the processor and that are in the possible implementations of the first aspect, refer to the first aspect. Details are not described herein again.

A sixth aspect of this application provides a multimedia data classification apparatus. The apparatus may include a processor; the processor is coupled to a memory; the memory stores program instructions; and when the program instructions stored in the memory are executed by the processor, the method according to any one of the second aspect or the implementations of the second aspect is implemented. For steps that are performed by the processor and that are in the possible implementations of the second aspect, refer to the second aspect. Details are not described herein again.

A seventh aspect of this application provides a computer-readable storage medium. The computer-readable storage medium stores a computer program. When the computer program is run on a computer, the computer is caused to perform the method according to any implementation of the first aspect or the second aspect.

An eighth aspect of this application provides a circuit system. The circuit system includes a processing circuit, and the processing circuit is configured to perform the method according to any implementation of the first aspect or the second aspect.

A ninth aspect of this application provides a computer program product. When the computer program product is run on a computer, the computer is caused to perform the method according to any implementation of the first aspect or the second aspect.

A tenth aspect of this application provides a chip system. The chip system includes a processor, configured to support an electronic device in implementing a function in any implementation of the first aspect or the second aspect, for example, processing data and/or information in the foregoing method. In a possible design, the chip system further includes a memory. The memory is configured to store program instructions and data that are necessary for the electronic device. The chip system may include a chip, or may include a chip and another discrete component.

For beneficial effects of the second aspect to the tenth aspect, refer to the descriptions of the first aspect. Details are not described herein again.

### BRIEF DESCRIPTION OF DRAWINGS

FIG. 1 is a diagram of a system architecture 100 according to an embodiment of this application;
FIG. 2 is a schematic flowchart of a model training method according to an embodiment of this application;
FIG. 3 is a diagram of training of a student network according to an embodiment of this application;
FIG. 4 is a diagram of determining a training objective of a student network according to an embodiment of this application;
FIG. 5a and FIG. 5b are diagrams of training of a student network when different types of data are input according to an embodiment of this application;
FIG. 6 is a schematic flowchart of training of a student network according to an embodiment of this application;
FIG. 7 is a diagram of training of a classification network according to an embodiment of this application;
FIG. 8 is a diagram of training of a teacher network according to an embodiment of this application;
FIG. 9 is a schematic flowchart of a multimedia data classification method according to an embodiment of this application;
FIG. 10 is a diagram of performing classification on multimedia data in an inference process according to an embodiment of this application;
FIG. 11 is a diagram of a structure of a model training apparatus according to an embodiment of this application;
FIG. 12 is a diagram of a structure of a multimedia data classification apparatus according to an embodiment of this application;
FIG. 13 is a diagram of a structure of an electronic device according to an embodiment of this application;
FIG. 14 is a diagram of a structure of a chip according to an embodiment of this application; and
FIG. 15 is a diagram of a structure of a computer-readable storage medium according to an embodiment of this application.

### DESCRIPTION OF EMBODIMENTS

To make the objectives, technical solutions, and advantages of this application clearer and more comprehensible, the following describes embodiments of this application with reference to the accompanying drawings. It is clear that the described embodiments are merely a part but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the descriptions termed in such a manner are interchangeable in proper cases so that embodiments can be implemented in another order than the order illustrated or described in this application. In addition, the terms "include", "have", and any variants thereof are intended to cover non-exclusive inclusion. For example, a process, method, system, product, or device including a series of steps or modules is not necessarily limited to those clearly listed steps or modules, but may include other steps or modules that are not clearly listed or are inherent to the process, method, product, or device. Naming or numbering of steps in this application does not mean that steps in a method procedure need to be performed based on a time/logical sequence indicated by the naming or numbering. An execution sequence of procedure steps that have been named or numbered may be changed based on a technical objective to be implemented, provided that same or similar technical effects can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. A part or all of the units may be selected according to actual requirements to achieve the objectives of the solutions of this application.

For ease of understanding, the following first describes some technical terms in embodiments of this application.

### (1) Teacher network

In embodiments, the teacher network is a pre-trained neural network, and is used to guide a training process of a student network, to implement training of the student network.

### (2) Student network

In embodiments, the student network is also a neural network, and a training process of the student network needs to be completed under guidance of the teacher network, that is, training of the student network depends on the teacher network.

### (3) Neural network

The neural network is composed of neurons. The neuron may be an operation unit that uses xs (namely, input data) and an intercept term of 1 as an input. An output of the operation unit may be as follows: ${h}_{W , b} \left(x\right) = f \left({W}^{T}x\right) = f \left({\sum }_{s = 1}^{n} {W}_{s} {x}_{s} + b\right)$

*s*=1, 2, ..., n, n is a natural number greater than 1, *Wₛ* is a weight of *xₛ*, *b* is a bias of the neuron, and *f* is an activation function (activation function) of the neuron, and is used to introduce a non-linear feature into the neural network, to convert an input signal in the neuron into an output signal. The output signal of the activation function may be used as an input of a next convolutional layer, and the activation function may be a sigmoid function. The neural network is a network formed by linking a plurality of individual neurons together. To be specific, an output of one neuron may be an input of another neuron. An input of each neuron may be connected to a local receptive field of a previous layer to extract a feature of the local receptive field. The local receptive field may be a region including several neurons.

### (4) Deep neural network (Deep Neural Network, DNN)

The deep neural network, also referred to as a multi-layer neural network, may be understood as a neural network having many hidden layers. The term "many" herein does not have a special measurement standard. The DNN is divided based on locations of different layers, and a neural network in the DNN may be divided into three types: an input layer, a hidden layer, and an output layer. Generally, a first layer is the input layer, a last layer is the output layer, and a middle layer is the hidden layer. Layers are fully connected. To be specific, any neuron at an i^{th} layer is necessarily connected to any neuron at an (i+1)^{th} layer. Although the DNN seems complex, operation of each layer is actually not complex. In simple words, a linear relationship expression is shown as follows: y̅ = α(Wx̅ + b̅). x̅ is an input vector. y̅ is an output vector. b̅ is an offset vector. W is a weight matrix (also referred to as a coefficient). α() is the activation function. At each layer, the output vector y̅is obtained by performing such a simple operation on the input vector . Because there are a large quantity of DNN layers, there are a large quantity of coefficients and a large quantity of offset vectors . b̅Definitions of these parameters in the DNN are as follows: The coefficient W is used as an example. It is assumed that in a DNN having three layers, a linear coefficient from a 4^{th} neuron at a second layer to a 2^{nd} neuron at a third layer is defined as ${w}_{24}^{3}$. The superscript 3 represents a layer at which the coefficient W is located, and the subscript corresponds to an output third-layer index 2 and an input second-layer index 4. In summary, a coefficient from a k^{th} neuron at an (L-1)^{th} layer to a j^{th} neuron at an L^{th} layer is defined as ${W}_{jk}^{L}$. It should be noted that the input layer does not have a parameter W. In the deep neural network, more hidden layers make the network more capable of describing a complex case in the real world. Theoretically, a model with more parameters has higher complexity and a larger "capacity". This means that the model can complete a more complex learning task. Training the deep neural network is a process of learning a weight matrix, and a final objective of the training is to obtain a weight matrix (a weight matrix formed by vectors W at many layers) of all layers of a trained deep neural network.

### (5) Convolutional neural network (Convolutional Neural Network, CNN)

The convolutional neural network is a deep neural network of a convolutional structure. The convolutional neural network includes a feature extractor including a convolutional layer and a sampling sub-layer. The feature extractor may be considered as a filter. A convolution process may be considered as performing convolution by using a trainable filter and an input feature map (feature map). The convolutional layer is a neuron layer that is in the convolutional neural network and at which convolution processing is performed on an input signal. At the convolutional layer of the convolutional neural network, one neuron may be connected only to a part of neurons at an adjacent layer. One convolutional layer usually includes several feature planes, and each feature plane may include some neurons that are in a rectangular arrangement. Neurons on a same feature plane share a weight. The shared weight herein is a convolution kernel.

The convolution kernel may be initialized in a form of a random-size matrix. In a training process of the convolutional neural network, the convolution kernel may obtain an appropriate weight through learning. In addition, a direct benefit of sharing a weight is to reduce connections between the layers of the convolutional neural network while reducing a risk of overfitting.

### (6) Recurrent neural network (Recurrent Neural Network, RNN)

The recurrent neural network is a type of a recursive neural network (recursive neural network) in which sequence (sequence) data is used as an input, recursion (recursion) is performed in a sequence evolution direction, and all nodes (recurrent units) are connected in a chain form.

The recurrent neural network has memory, parameter sharing, and Turing completeness (Turing completeness), and therefore has specific advantages in learning nonlinear features of a sequence. The recurrent neural network is used in the field of natural language processing (Natural Language Processing, NLP), such as speech recognition, language modeling, and machine translation, and is also used in various types of time series forecasting.

### (7) Attention network

The attention network is a network model that uses an attention mechanism to increase a model training speed. Currently, a typical attention network includes a transformer network. A model to which the attention mechanism is applied can assign different weights to parts of an input sequence, so that more important feature information is extracted from the input sequence, and the model finally obtains a more accurate output.

### (8) Loss function

In a process of training the neural network, it is expected that an output of the neural network is as close as possible to a value that is truly expected to be predicted. Therefore, a predicted value of a current network and a target value that is truly desired may be compared, and then a weight vector at each layer of the neural network may be updated based on a difference between the predicted value of the current network and the target value that is truly desired (where certainly, an initialization process is usually performed before a 1^{st} time of update, that is, a parameter is preconfigured at each layer of the neural network). For example, if a predicted value of the network is high, the weight vector is adjusted to make the predicted value lower, and adjustment is continuously performed, until the neural network can predict a target value that is truly desired or a value that is very close to the target value that is truly desired. Therefore, "how to obtain, through comparison, a difference between the predicted value and the target value" needs to be predefined. This is the loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the neural network is a process of reducing the loss as much as possible.

### (9) Back propagation algorithm

In the neural network, an error back propagation (back propagation, BP) algorithm may be used to correct a value of a parameter in an initial prediction model in a training process, so that an error loss of the prediction model becomes increasingly small. Specifically, an input signal is transferred forward until an error loss occurs in an output, and the parameter in the initial prediction model is updated based on back propagation error loss information, so that the error loss converges. The back propagation algorithm is an error-loss-centered back propagation motion, and is intended to obtain an optimal prediction model parameter, for example, a weight matrix.

Specifically, in a model training process, the back propagation algorithm is usually used to calculate a gradient of each node in the model, so as to adjust a weight parameter of each node based on the gradient of the node. In this way, a loss function value of the model is reduced as much as possible. The gradient represents a rate of change of a function at a specific point. In addition, a gradient of each node in the model may be determined by calculating a partial derivative.

### (10) Gradient descent (Gradient descent) algorithm

The gradient descent algorithm is a first-order optimization algorithm, and is often used in machine learning to recursively approach a minimum deviation prediction model. To find a local minimum value of a function by using the gradient descent algorithm, iterative search needs to be performed on a point that is a specified step size away in an opposite direction of a gradient (or an approximate gradient) of the function based on a current point. The gradient descent algorithm is one of most commonly used methods for solving a prediction model parameter of a machine learning algorithm, namely, an unconstrained optimization problem.

Specifically, when a minimum value of the loss function is solved, the gradient descent algorithm may be used to perform iterative solving step by step, to obtain a minimum loss function value and a prediction model parameter value. Conversely, if a maximum value of the loss function needs to be solved, a gradient rise algorithm needs to be used for iteration.

It is found through research by the applicant that, a current method for identifying AI-generated images is usually training a neural network based on a simple cross entropy loss function, to obtain an image classification model that can perform binary classification. However, for this conventional image classification model, if images generated by a specific AI generator already exist in a training set, the image classification model can obtain an accurate classification result when identifying another image generated by the AI generator; or if an image generated by a specific AI generator never exists in the training set, it is difficult for the image classification model to obtain an accurate classification result when the image classification model identifies an image generated by the AI generator. In other words, it is difficult for the current image classification model to obtain good classification performance when the current image classification model processes an image generated by an unknown AI generator.

Based on this, embodiments of this application provide a model training method. Extracted multimedia data is separately input into a teacher network and a student network, and the student network is trained based on a difference between a feature output by the teacher network and a feature output by the student network, so that the student network can output a feature that is similar to an output feature of the teacher network when processing non-AI-generated multimedia data, and output a feature that is greatly different from an output feature of the teacher network when processing AI-generated multimedia data. To be specific, the student network and the teacher network are jointly used as a detector of the multimedia data, and a difference value between an output of the student network and an output of the teacher network is an output of the detector. In a training process of the detector, a training focus is targeted to expand an output difference of the detector when real multimedia data and the AI-generated multimedia data are processed. This allows a resulting detector to effectively handle various types of AI-generated multimedia data, and improves accuracy of identifying AI-generated multimedia data.

The model training method provided in embodiments of this application may be applied to a training model for classifying various types of multimedia data, for example, multimedia data like image, video, text, or voice, to classify the multimedia data into AI-generated multimedia data or non-AI-generated multimedia data. A multimedia data classification method provided in embodiments of this application may be applied to classification of various types of multimedia data.

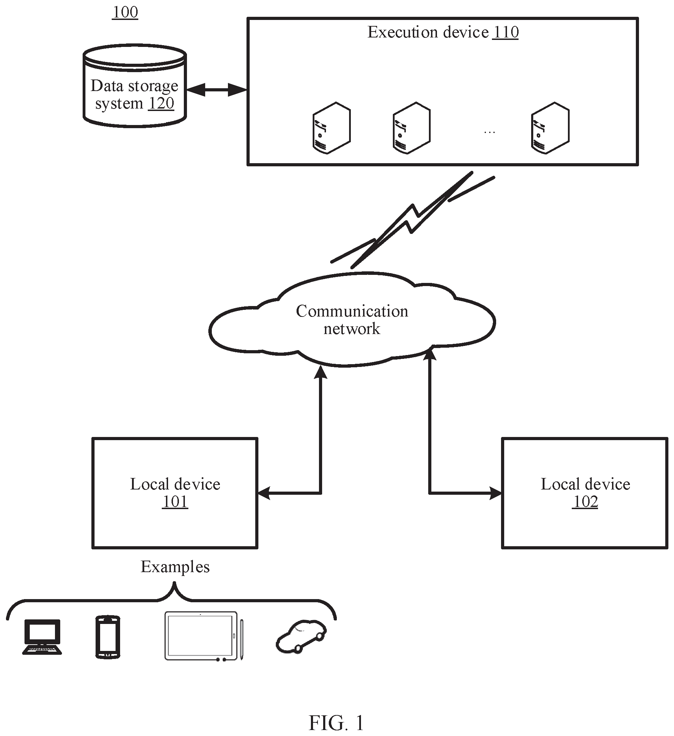

FIG. 1 is a diagram of a system architecture 100 according to an embodiment of this application. As shown in FIG. 1, in the system architecture 100, an execution device 110 may be implemented by one or more servers. Optionally, the execution device 110 cooperates with another compute device, for example, a device like a data storage, a router, or a load balancer. The execution device 110 may be disposed at one physical site, or may be distributed at a plurality of physical sites. The execution device 110 may implement a model training method and/or a multimedia data classification method provided in embodiments of this application by using data in a data storage system 120 or by invoking program code in the data storage system 120.

A user may operate user equipment (for example, a local device 101 and a local device 102) to interact with the execution device 110. Each local device may represent any compute device, for example, a personal computer, a computer workstation, a smartphone, a tablet computer, a notebook computer, or an intelligent vehicle.

The local device of each user may interact with the execution device 110 through a communication network of any communication mechanism/communication standard. The communication network may be a wide area network, a local area network, a point-to-point connection, or any combination thereof.

In an implementation, the execution device 110 is configured to implement the model training method and the multimedia data classification method provided in embodiments of this application, to obtain a model configured to implement multimedia data classification. In addition, in a process in which the local device 101 and the local device 102 need to classify multimedia data, the execution device 110 classifies, based on the trained model, multimedia data provided by the user, and then returns a corresponding classification result to the local device 101 and the local device 102.

In another implementation, the execution device 110 is configured to: implement the model training method provided in embodiments of this application, and deliver, to the local device 101 and the local device 102, the obtained model configured to implement multimedia data classification. In this way, in a process in which the local device 101 and the local device 102 need to classify the multimedia data, the local device 101 and the local device 102 may classify, based on the trained model, the multimedia data provided by the user, to obtain a corresponding classification result.

In another implementation, one or more aspects of the execution device 110 may be implemented by each local device. For example, the local device 101 may provide local data for or feed back a calculation result to the execution device 110, or may perform the model training method and the multimedia data classification method provided in embodiments of this application.

It should be noted that all functions of the execution device 110 may also be implemented by the local device. For example, the local device 101 implements a function of the execution device 110 and provides a service for a user of the local device 101, or provides a service for a user of the local device 102.

In conclusion, the model training method and/or the multimedia data classification method provided in embodiments of this application may be applied to an electronic device, for example, the foregoing execution device 110, the foregoing local device 101, or the foregoing local device 102.

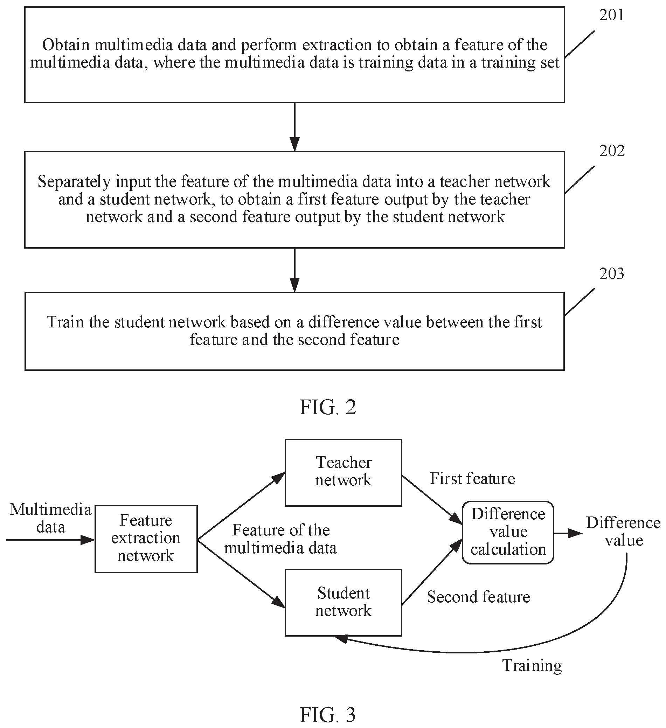

FIG. 2 is a schematic flowchart of a model training method according to an embodiment of this application. As shown in FIG. 2, the model training method provided in this embodiment of this application includes the following steps 201 to 203.

Step 201: Obtain multimedia data and perform extraction to a feature of the multimedia data, where the multimedia data is training data in a training set.

In this embodiment, the multimedia data is, for example, data like image, video, text, or voice. This is not specifically limited in this embodiment.

Extracting the feature of the multimedia data may be: performing feature extraction on the multimedia data by using a pre-trained feature extraction network, or may be: converting the multimedia data into a feature matrix that can be used as an input of a neural network. This is not specifically limited in this embodiment.

Step 202: Separately input the feature of the multimedia data into a teacher network and a student network, to obtain a first feature output by the teacher network and a second feature output by the student network.

After the feature of the multimedia data is obtained, the teacher network and the student network feature separately perform feature processing on the feature of the multimedia data, to obtain the first feature and the second feature. Both the teacher network and the student network may be neural networks such as deep neural networks, attention networks (for example, transformer networks), or convolutional neural networks that can perform feature processing on the feature of the multimedia data. Structures of the teacher network and the student network are not limited herein in this embodiment. In addition, the structure of the teacher network may be the same as or different from the structure of the student network.

Optionally, the teacher network is a pre-trained neural network, and a training objective of the teacher network in a training phase is to reduce a difference between a classification result obtained based on a feature output by the teacher network and a real classification result. In other words, in the training phase of the teacher network, a feature output by the teacher network is further used to perform classification (for example, perform classification on the feature output by the teacher network based on a classifier) and obtain a corresponding classification result. In this way, when the teacher network is trained, a training objective in the training phase is set to reduce the difference between the classification result obtained based on the feature output by the teacher network and the real classification result, so that for the non-AI-generated multimedia data and the AI-generated multimedia data, the teacher network can output features that are greatly different, and it is ensured that a feature of the non-AI-generated multimedia data and a feature of the AI-generated multimedia data that are output by the teacher network are distinct enough, to improve accuracy of the student network obtained through subsequent training.

Step 203: Train the student network based on a difference value between the first feature and the second feature.

In this embodiment, after the first feature output by the teacher network and the second feature output by the student network are obtained, the difference value between the first feature and the second feature is first calculated. In addition, the difference value between the first feature and the second feature can be used to obtain a classification result of the multimedia data, and the classification result indicates whether the multimedia data is AI-generated. Specifically, the classification result may indicate a probability that the multimedia data is AI-generated and a probability that the multimedia data is not AI-generated, and the probability that the multimedia data is AI-generated is positively correlated with the difference value. To be specific, subsequent classification of the multimedia data is performed based on a difference value between a feature output by the teacher network and a feature output by the student network, and different classification results may be obtained for different difference values. In addition, a larger difference value between the feature output by the teacher network and the feature output by the student network indicates a higher probability that the multimedia data is AI-generated; and a smaller difference value between the feature output by the teacher network and the feature output by the student network indicates a lower probability that the multimedia data is AI-generated.

Because the difference value between the feature output by the teacher network and the feature output by the student network is used to obtain a classification result, in a training phase of the student network, for different types of input data, the student network needs to be trained to output a feature that is different from the feature output by the teacher network. Specifically, a training objective of the student network is to reduce a difference between a feature output by the student network and a feature output by the teacher network when non-AI-generated multimedia data is processed, and increase a difference between a feature output by the student network and a feature output by the teacher network when AI-generated multimedia data is processed.

In other words, when an input of the teacher network and the student network is a feature of the non-AI-generated multimedia data, during training, the student network needs to reduce the difference between the feature output by the student network and the feature output by the teacher network. That is, for the non-AI-generated multimedia data, it is ensured that the feature output by the student network is as similar as possible to the feature output by the teacher network. When an input of the teacher network and the student network is a feature of the AI-generated multimedia data, during training, the student network needs to increase the difference between the feature output by the student network and the feature output by the teacher network. That is, for the AI-generated multimedia data, it is ensured that the feature output by the student network is as different as possible from the feature output by the teacher network.

For example, FIG. 3 is a diagram of training of a student network according to an embodiment of this application. As shown in FIG. 3, after the multimedia data is input into a feature extraction network, a feature of the multimedia data output by the feature extraction network is obtained. Then, the feature of the multimedia data is separately input into the teacher network and the student network, to obtain the first feature output by the teacher network and the second feature output by the student network. Then, difference value calculation is performed on the first feature and the second feature, to obtain a difference value between the first feature and the second feature. The difference value is used to construct a loss function to train the student network.

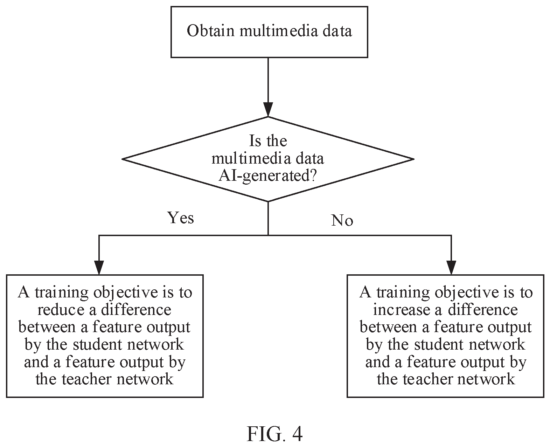

FIG. 4 is a diagram of determining a training objective of a student network according to an embodiment of this application. As shown in FIG. 4, after the multimedia data is obtained, whether the multimedia data is AI-generated may be determined. When the multimedia data is AI-generated, it is determined that the training objective of the student network is to reduce the difference between the feature output by the student network and the feature output by the teacher network; or when the multimedia data is not AI-generated, it is determined that the training objective of the student network is to increase the difference between the feature output by the student network and the feature output by the teacher network.

In conclusion, the student network is trained in the foregoing training manner. This can focus on expanding the difference between the feature output by the student network and the feature output by the teacher network when the student network and the teacher network deal with real multimedia data and the AI-generated multimedia data, so that finally, the student network and the teacher network can output features as similar as possible when dealing with the real multimedia data, and can output features as different as possible when dealing with the AI-generated multimedia data. In this way, difference values that are used to obtain classification results and that correspond to the real multimedia data and the AI-generated multimedia data can be greatly different, to ensure that the student network outputs, as much as possible, a feature different from that of the teacher network when subsequently dealing with AI-generated multimedia data generated by an unknown generator, so as to improve accuracy of identifying the AI-generated multimedia data.

Optionally, to cause the student network to learn features of more types of AI-generated data in the training phase, in this embodiment, different training procedures are separately designed for the non-AI-generated multimedia data and the AI-generated multimedia data.

For example, in the foregoing step 201, the performing extraction to obtain the feature of the multimedia data specifically includes: when the multimedia data is AI-generated, inputting the multimedia data into the feature extraction network, to obtain the feature of the multimedia data output by the feature extraction network. To be specific, the non-AI-generated multimedia data is input into the feature extraction network to obtain a feature through extraction. The feature is then immediately input into the teacher network and the student network. This is equivalent to a case in which an input of both the teacher network and the student network is an output of the feature extraction network.

Alternatively, when the multimedia data is not AI-generated, the multimedia data is input into the feature extraction network, and a feature output by the feature extraction network is input into a feature enhancement network, to obtain the feature of the multimedia data output by the feature enhancement network. To be specific, the AI-generated multimedia data is input into the feature extraction network to obtain a feature through extraction, and then, the feature is input into the feature enhancement network to perform feature enhancement, and then input into the teacher network and the student network. This is equivalent to a case in which an input of both the teacher network and the student network is an output of the feature enhancement network.

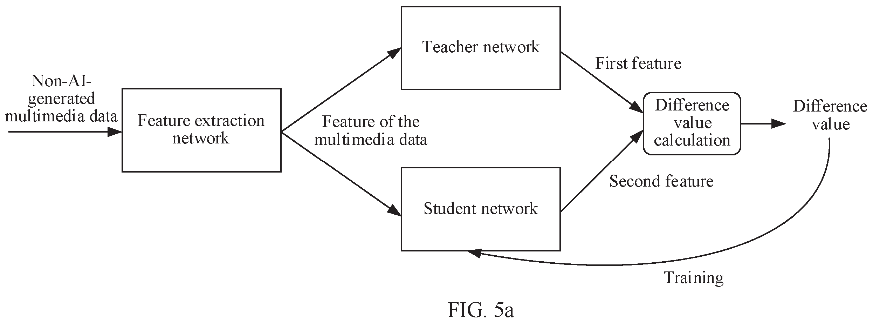

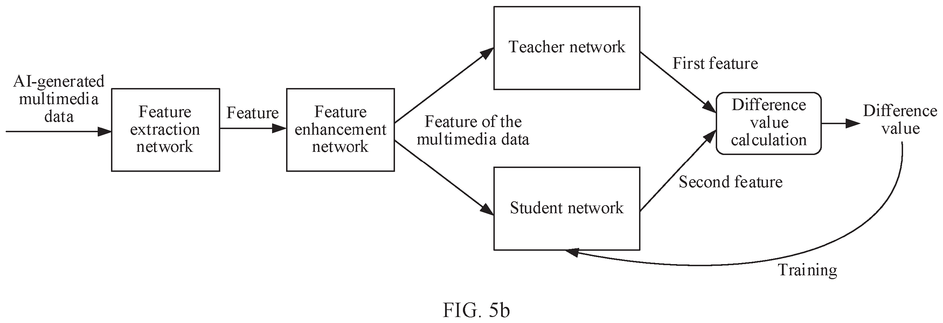

For example, FIG. 5a and FIG. 5b are diagrams of training of a student network when different types of data are input according to an embodiment of this application. As shown in FIG. 5a, when input data is non-AI-generated multimedia data, the non-AI-generated multimedia data is first input into the feature extraction network, to obtain a feature of the multimedia data output by the feature extraction network; and then the feature of the multimedia data is separately input into the teacher network and the student network, and a difference value between a feature output by the teacher network and a feature output by the student network is calculated, to perform training of the student network based on the difference value.

As shown in FIG. 5b, when the input data is AI-generated multimedia data, the AI-generated multimedia data is first input into the feature extraction network, to obtain a feature output by the feature extraction network, and then the feature output by the feature extraction network is input into the feature enhancement network. The feature enhancement network performs feature enhancement on the input feature, and finally, the feature of the multimedia data output by the feature enhancement network is separately input into the teacher network and the student network, and a difference value between a feature output by the teacher network and a feature output by the student network is obtained, to perform training of the student network based on the difference value.

In this solution, for the AI-generated multimedia data, the feature enhancement network is provided after the feature extraction network, so that feature enhancement can be performed on a feature of the AI-generated multimedia data. This is equivalent to a case in which AI generation processing is performed again based on an original feature, to obtain a feature of the AI-generated multimedia data of more types. It is ensured that the student network can learn as many features of the AI-generated multimedia data as possible in a training phase, and generalization of the student network is improved.

Optionally, the student network and the feature enhancement network may be alternately trained in a training process of the student network. For example, after one round of iterative training performed on the student network based on a part or all of training data is completed, one round of iterative training is performed on the feature enhancement network based on a part or all of training data. After one round of iterative training performed on the feature enhancement network is completed, training on the student network continues to be performed, and so on, until a plurality of rounds of training on the student network and the feature enhancement network are completed.

In addition, in a training process of the feature enhancement network, a training objective of the feature enhancement network is to reduce a difference between a feature output by the student network and a feature output by the teacher network.

In other words, the feature enhancement network is trained, so that the feature enhancement network can generate various features based on a feature of original AI-generated multimedia data. In addition, when these features are used as inputs of the student network and the teacher network, it is difficult for the student network to output a feature that is distinct enough from the output feature of the teacher network. In this way, the student network is subsequently trained to output a feature that is greatly different from the output feature of the teacher network when dealing with various types of AI-generated multimedia data, so as to ensure that the student network can also have high performance in an inference phase when dealing with multimedia data generated by various unknown generators.

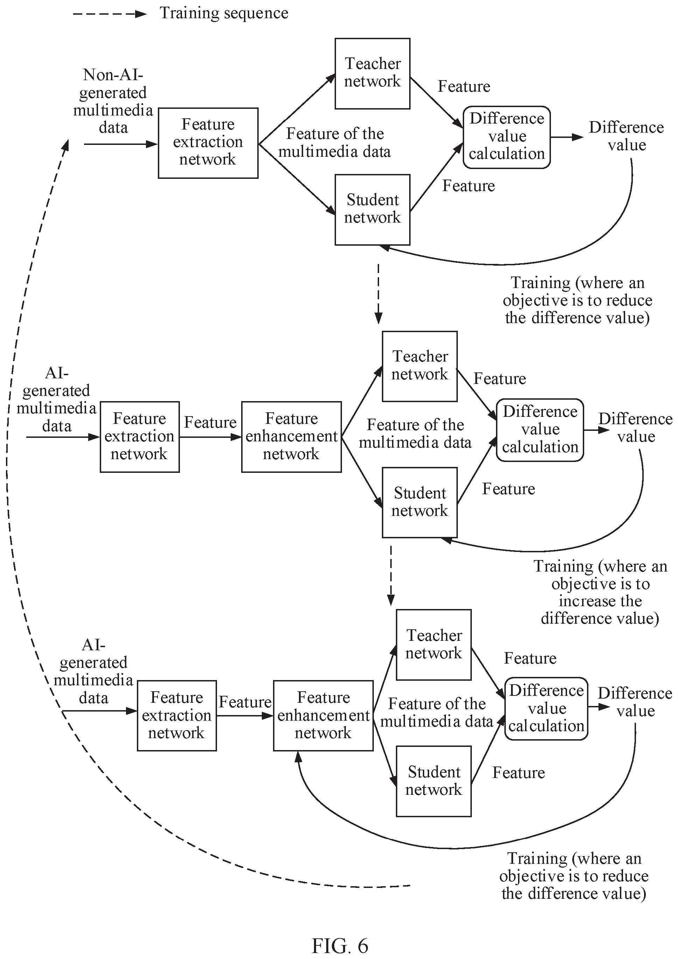

For example, FIG. 6 is a schematic flowchart of training of a student network according to an embodiment of this application. As shown in FIG. 6, a training process of the student network actually includes three phases that are alternately performed. In a 1^{st} phase, the student network is trained based on non-AI-generated multimedia data. In a 2^{nd} phase, the student network is trained based on AI-generated multimedia data. In a 3^{rd} phase, the feature enhancement network is trained based on AI-generated multimedia data.

In the 1^{st} phase, the teacher network and the student network are connected after the feature extraction network. After the non-AI-generated multimedia data is input into the feature extraction network, a feature of the multimedia data output by the feature extraction network is separately input into the teacher network and the student network, and difference value calculation is performed on a feature output by the teacher network and a feature output by the student network. Finally, a loss function is constructed based on the obtained difference value, and the student network is trained based on the loss function. In addition, a training objective of the student network is to reduce a difference value between a feature output by the student network and a feature output by the teacher network. In the 1^{st} phase, the student network may be trained based on a part or all of non-AI-generated multimedia data in the training set.

For example, in the 1^{st} phase, a loss function for training the student network may be shown in the following formula: ${L}_{dis}^{r} \left({z}_{t}^{r}, {z}_{s}^{r}\right) = \frac{1}{N} {\sum }_{b = 1} {\left({N}_{t}\left({x}^{r}\right)-{N}_{s}\left({x}^{r}\right)\right)}^{2}$${L}_{dis}^{r} \left({z}_{t}^{r}, {z}_{s}^{r}\right)$ represents the loss function for training the student network when an input is the nonAI-generated multimedia data. ${z}_{t}^{r}$ represents the feature output by the teacher network. ${z}_{s}^{r}$ represents the feature output by the student network. N represents a batch data size. b represents a batch of training data during training. *Nₜ*(*x^{r}*) represents a feature output by a teacher network *Nₜ*. *Nₛ*(*x^{r}*) represents a feature output by a student network *Nₛ*. *x^{r}* represents the non-AI-generated multimedia data.

In the 2^{nd} phase, the feature enhancement network is connected after the feature extraction network, and the teacher network and the student network are connected after the feature enhancement network. After the AI-generated multimedia data is input into the feature extraction network, a feature output by the feature extraction network continues to be input into the feature enhancement network, and a feature of the multimedia data output by the feature enhancement network is separately input into the teacher network and the student network. Then, difference value calculation is performed on the feature output by the teacher network and the feature output by the student network, and the student network is trained based on the obtained difference value. In addition, a training objective of the student network is to increase a difference value between a feature output by the student network and a feature output by the teacher network. In the 2^{nd} phase, the student network may be trained based on a part or all of AI-generated multimedia data in the training set.

For example, in the 2^{nd} phase, a loss function for training the student network may be shown in the following formula: ${L}_{dis}^{f} \left({z}_{t}^{f}, {z}_{s}^{f}\right) = {\left[M-{\left|\frac{{N}_{t} \left(G\left({x}^{f}\right)\right)}{{\left‖{N}_{t}\left(G\left({x}^{f}\right)\right)\right‖}^{2}}-\frac{{N}_{s} \left(G\left({x}^{f}\right)\right)}{{\left‖{N}_{s}\left(G\left({x}^{f}\right)\right)\right‖}^{2}}\right|}^{2},0\right]}_{+}$${L}_{dis}^{f} \left({z}_{t}^{f}, {z}_{s}^{f}\right)$ represents the loss function for training the student network when an input is the AI-generated multimedia data. ${z}_{t}^{f}$ represents the feature output by the teacher network. ${z}_{s}^{f}$ represents the feature output by the student network. *Nₜ*(*G*(*x^{f}*)) represents a feature output by a teacher network *Nₜ. Nₛ*(*G*(*x^{f}*)) represents a feature output by a student network *Nₛ. x^{f}* represents the AI-generated multimedia data. [*x*, 0]₊ represents max(x, 0). M is a hyperparameter, and may be set to 1 according to experience. In simple words, a training process of the student network is to reduce a value of the loss function ${L}_{dis}^{f} \left({z}_{t}^{f}, {z}_{s}^{f}\right)$ as much as possible, that is, increase the difference between the feature output by the student network and the feature output by the teacher network.

In the 3^{rd} phase, a connection relationship and input data of a neural network are the same as those in the 2^{nd} phase, and a difference lies in that, after a difference value between an output feature of the teacher network and an output feature of the student network is obtained, the feature enhancement network is trained based on the difference value. In addition, a training objective of the feature enhancement network is to reduce a difference value between a feature output by the student network and a feature output by the teacher network. In the 2^{nd} phase, the student network may be trained based on a part or all of the AI-generated multimedia data in the training set.

For example, in the 3^{rd} phase, a loss function for training the feature enhancement network may be shown in the following formula: ${L}_{dis}^{g} \left({z}_{t}^{f}, {z}_{s}^{f}\right) = \frac{1}{N} {{\sum }_{b = 1} \left({N}_{t}\left(G\left({x}^{f}\right)\right)-{N}_{s}\left(G\left({x}^{f}\right)\right)\right)}^{2}$${L}_{dis}^{g} \left({z}_{t}^{f}, {z}_{s}^{f}\right)$ represents the loss function for training the feature enhancement network when an input is the non-AI-generated multimedia data. ${z}_{t}^{f}$ represents the feature output by the teacher network. ${z}_{s}^{f}$ represents the feature output by the student network. *Nₜ*(*G*(*x^{f}*)) represents a feature output by the teacher network *Nt. Nₛ*(*G*(*x^{f}*)) represents a feature output by the student network *Nₛ. x^{f}* represents the AI-generated multimedia data. N represents a batch data size. b represents a batch of training data during training.

In an actual training process, specifically, a training process in the 1^{st} phase may be first performed, then a training process in the 2^{nd} phase is performed, and then a training process in the 3^{rd} phase is performed. After the training process in the 3^{rd} phase is completed, the 1^{st} phase, the 2^{nd} phase, and the 3^{rd} phase are repeatedly performed until a preset round is performed in each phase, or an output of the student network reaches a preset condition.

It should be noted that, that the 1^{st} phase, the 2^{nd} phase, and the 3^{rd} phase are performed in sequence is described above. Actually, the foregoing three phases may alternatively be performed in another sequence. For example, the 2^{nd} phase is performed first, then the 1^{st} phase is performed, and then the 3^{rd} phase is performed. An execution sequence of the three phases is not specifically limited in this embodiment.

Optionally, because the difference value between the output feature of the student network and the output feature of the teacher network is used to obtain a classification result, after training of the student network is completed, a classification network whose input is the difference value may be further trained, to ensure that the classification network can obtain an accurate classification result based on the input difference value.

For example, after training of the student network is completed, the feature of the multimedia data used to train the student network may be input into a trained student network, to obtain a third feature. Then, a difference value between the first feature and the third feature is input into the classification network, to obtain a classification result output by the classification network. The classification result output by the classification network indicates whether the multimedia data is AI-generated. Finally, the classification network is trained based on the classification result output by the classification network and a real classification result corresponding to the multimedia data. A training objective of the classification network is to reduce a difference between the classification result output by the classification network and the real classification result.

In other words, an input of the classification network is a difference value between the feature output by the teacher network and a feature output by the trained student network, and an output of the classification network is the classification result of multimedia data, that is, the classification network is configured to determine the classification result based on the difference value. After training of both the teacher network and the student network is completed, the classification network may be trained based on the teacher network and the student network that have completed training, so that the classification network can output an accurate classification result based on the difference value.

The classification network may be a neural network, for example, a deep neural network, an attention network (for example, a transformer network), or a convolutional neural network that can perform binary classification. A structure of the classification network is not limited in this embodiment.

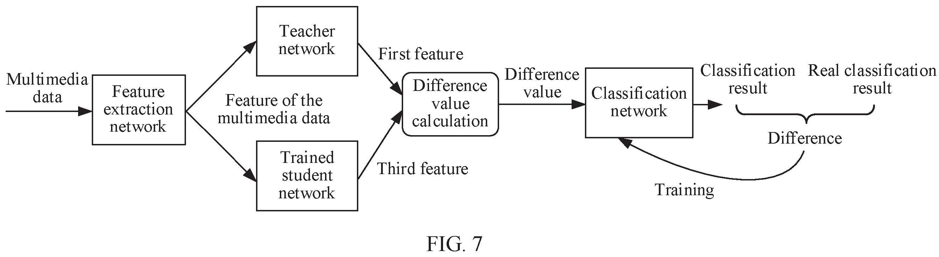

For example, FIG. 7 is a diagram of training of a classification network according to an embodiment of this application. As shown in FIG. 7, after multimedia data is input into a feature extraction network, a feature of the multimedia data output by the feature extraction network may be separately input into a teacher network and a trained student network, to obtain a first feature and a third feature respectively. Then, a difference value between the first feature and the third feature is calculated, and the difference value is input into the classification network, to obtain a classification result output by the classification network. Finally, a loss function is constructed based on the classification result output by the classification network and a real classification result of the multimedia data to implement the training of the classification network.

The training processes of the student network and the classification network are described above, and a training process of the teacher network is described below. The training process of the teacher network is before the training of the student network and the classification network.

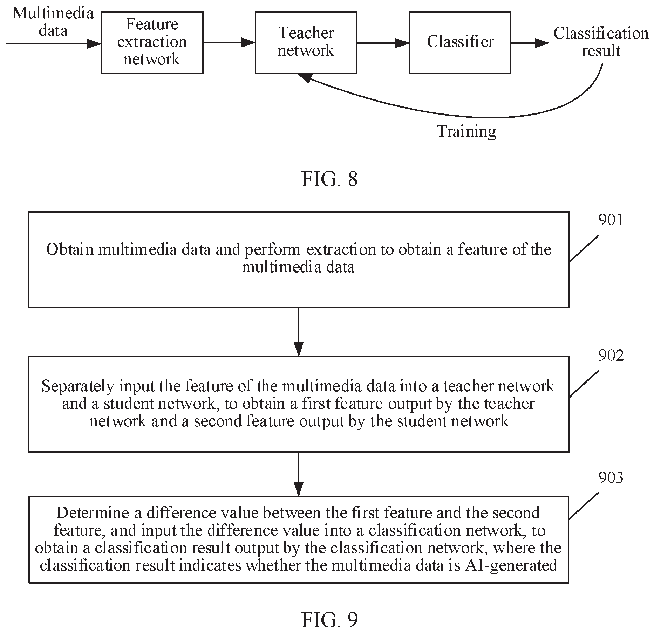

For example, FIG. 8 is a diagram of training of a teacher network according to an embodiment of this application. As shown in FIG. 8, the teacher network is connected between a feature extraction network and a classifier. The feature extraction network is configured to perform feature extraction on multimedia data, and output a feature that is obtained through extraction. Then, the teacher network performs processing on the feature output by the feature extraction network, and outputs a processed feature. The classifier is a binary classification network, and is configured to process the feature output by the teacher network, to output a classification result. Based on the classification result output by the classifier and a real classification result corresponding to the multimedia data, a loss function (for example, a cross entropy loss function) may be constructed, to train the teacher network, so that the classifier outputs a classification result close to the real classification result as much as possible.

The foregoing describes the model training method provided in embodiments of this application. According to the model training method described in the foregoing embodiments, training of the teacher network, the student network, and the classification network can be implemented. The following describes a multimedia data classification method according to embodiments of this application.

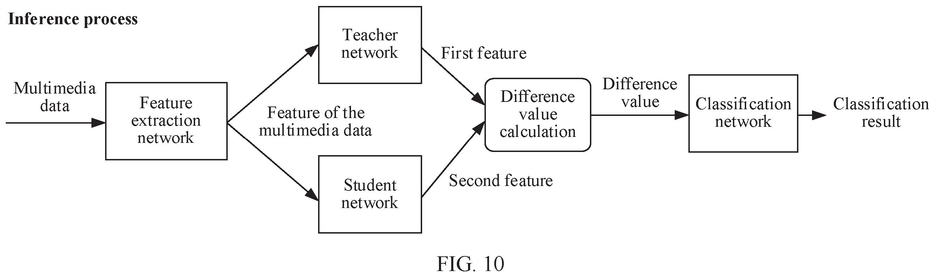

For example, refer to FIG. 9 and FIG. 10. FIG. 9 is a schematic flowchart of a multimedia data classification method according to an embodiment of this application. FIG. 10 is a diagram of performing classification on multimedia data in an inference process according to an embodiment of this application. As shown in FIG. 9, the multimedia data classification method includes the following steps 901 to 903.

Step 901: Obtain multimedia data and perform extraction to obtain a feature of the multimedia data.

In this embodiment, the obtained multimedia data is multimedia data, for example, data like image, video, text, or voice, that needs to be identified in the inference process to identify whether the multimedia data is AI-generated. Extracting the feature of the multimedia data may be: performing feature extraction on the multimedia data by using a pre-trained feature extraction network, or may be: converting the multimedia data into a feature matrix that can be used as an input of a neural network. This is not specifically limited in this embodiment.

Step 902: Separately input the feature of the multimedia data into a teacher network and a student network, to obtain a first feature output by the teacher network and a second feature output by the student network.

In this embodiment, step 902 is similar to the foregoing step 202. For details, refer to the foregoing step 202. Details are not described herein again. In addition, both the teacher network and the student network in this embodiment are trained neural networks, for example, the teacher network and the student network that are obtained through training based on the model training method described in the foregoing embodiments.

Step 903: Determine a difference value between the first feature and the second feature, and input the difference value into a classification network, to obtain a classification result output by the classification network, where the classification result indicates whether the multimedia data is AI-generated.

In other words, a difference value between a feature output by the teacher network and a feature output by the student network is first obtained, and then the difference value is processed by using the classification network, to obtain a classification result of the multimedia data.

In this solution, extracted multimedia data is separately input into the teacher network and the student network, and classification of the multimedia data is performed based on a difference between a feature output by the teacher network and a feature output by the student network, so that the classification network no longer directly performs classification based on the feature of the multimedia data, but performs classification based on a feature difference value that facilitates easier classification, to improve accuracy of identifying AI-generated multimedia data.

Optionally, the classification result specifically indicates a probability that the multimedia data is AI-generated and a probability that the multimedia data is not AI-generated, and the probability that the multimedia data is AI-generated is positively correlated with the difference value.

Optionally, the teacher network is a pre-trained neural network, the student network is trained under guidance of the teacher network, and a training objective of the student network in a training phase is to reduce a difference between a feature output by the student network and a feature output by the teacher network when non-AI-generated multimedia data is processed, and increase a difference between a feature output by the student network and a feature output by the teacher network when AI-generated multimedia data is processed.

Optionally, a training objective of the teacher network in a training phase is to reduce a difference between a classification result obtained based on a feature output by the teacher network and a real classification result.

The foregoing describes in detail the method provided in embodiments of this application. The following describes a device that is provided in embodiments of this application and that is configured to perform the foregoing method.

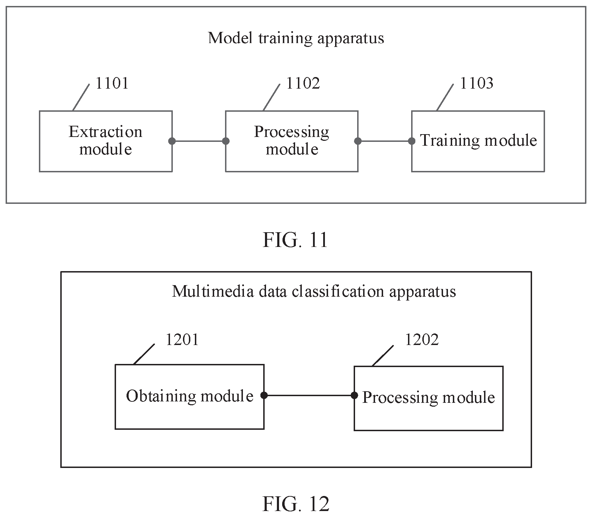

FIG. 11 is a diagram of a structure of a model training apparatus according to an embodiment of this application. As shown in FIG. 11, the model training apparatus provided in this embodiment of this application includes: an extraction module 1101, configured to obtain multimedia data and perform extraction to obtain a feature of the multimedia data, where the multimedia data is training data in a training set; a processing module 1102, configured to separately input the feature of the multimedia data into a teacher network and a student network, to obtain a first feature output by the teacher network and a second feature output by the student network; and a training module 1103, configured to train the student network based on a difference value between the first feature and the second feature, where the difference value is used to obtain a classification result of multimedia data, the classification result indicates whether the multimedia data is AI-generated, and a training objective of the student network is to reduce a difference between a feature output by the student network and a feature output by the teacher network when non-AI-generated multimedia data is processed, and increase a difference between a feature output by the student network and a feature output by the teacher network when AI-generated multimedia data is processed.

In a possible implementation, the classification result specifically indicates a probability that the multimedia data is AI-generated and a probability that the multimedia data is not AI-generated, and the probability that the multimedia data is AI-generated is positively correlated with the difference value.

In a possible implementation, the extraction module 1101 is specifically configured to: when the multimedia data is generated not through the AI, input the multimedia data into a feature extraction network, to obtain the feature of the multimedia data output by the feature extraction network; or when the multimedia data is AI-generated, input the multimedia data into the feature extraction network, and input a feature output by the feature extraction network into a feature enhancement network, to obtain the feature of the multimedia data output by the feature enhancement network.

In a possible implementation, the training module 1103 is further configured to alternately train the student network and the feature enhancement network in a training process of the student network, where a training objective of the feature enhancement network is to reduce a difference between a feature output by the student network and a feature output by the teacher network.

In a possible implementation, the teacher network is a pre-trained neural network, and a training objective of the teacher network in a training phase is to reduce a difference between a classification result obtained based on a feature output by the teacher network and a real classification result.

In a possible implementation, the training module 1103 is further configured to: after training of the student network is completed, input the feature of the multimedia data into a trained student network, to obtain a third feature; input a difference value between the first feature and the third feature into a classification network, to obtain a classification result output by the classification network, where the classification result output by the classification network indicates whether the multimedia data is AI-generated; and train the classification network based on the classification result output by the classification network and a real classification result corresponding to the multimedia data, where a training objective of the classification network is to reduce a difference between the classification result output by the classification network and the real classification result.

In a possible implementation, the multimedia data is any one of the following data: image, video, text, or voice.

FIG. 12 is a diagram of a structure of a multimedia data classification apparatus according to an embodiment of this application. As shown in FIG. 12, an embodiment of this application provides the multimedia data classification apparatus, including: an obtaining module 1201, configured to obtain multimedia data and perform extraction to obtain a feature of the multimedia data; and a processing module 1202, configured to separately input the feature of the multimedia data into a teacher network and a student network, to obtain a first feature output by the teacher network and a second feature output by the student network. The processing module 1202 is further configured to: determine a difference value between the first feature and the second feature, and input the difference value into a classification network, to obtain a classification result output by the classification network, where the classification result indicates whether the multimedia data is AI-generated.

In a possible implementation, the classification result specifically indicates a probability that the multimedia data is AI-generated and a probability that the multimedia data is not AI-generated, and the probability that the multimedia data is AI-generated is positively correlated with the difference value.

In a possible implementation, the teacher network is a pre-trained neural network, the student network is trained under guidance of the teacher network, and a training objective of the student network in a training phase is to reduce a difference between a feature output by the student network and a feature output by the teacher network when non-AI-generated multimedia data is processed, and increase a difference between a feature output by the student network and a feature output by the teacher network when AI-generated multimedia data is processed.

In a possible implementation, a training objective of the teacher network in a training phase is to reduce a difference between a classification result obtained based on a feature output by the teacher network and a real classification result.

In a possible implementation, the multimedia data is any one of the following data: image, video, text, or voice.

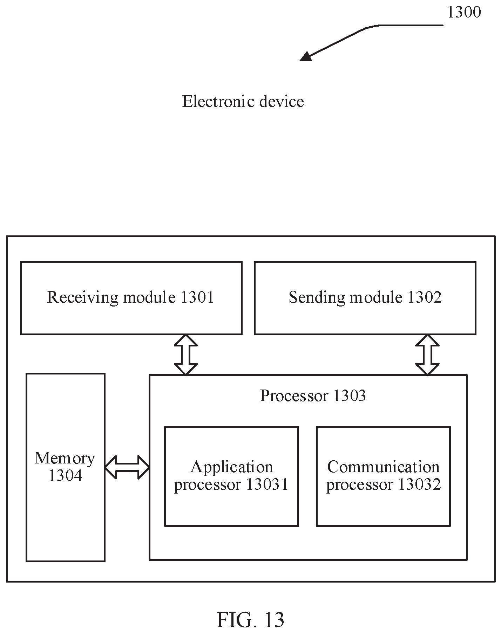

FIG. 13 is a diagram of a structure of an electronic device according to an embodiment of this application. The electronic device 1300 may be specifically represented as a mobile phone, a tablet computer, a notebook computer, a smart wearable device, a server, or the like. This is not limited herein. Specifically, the electronic device 1300 includes a receiving module 1301, a sending module 1302, a processor 1303, and a memory 1304 (where there may be one or more processors 1303 in the electronic device 1300, and one processor is used as an example in FIG. 13.) The processor 1303 may include an application processor 13031 and a communication processor 13032. In some embodiments of this application, the receiving module 1301, the sending module 1302, the processor 1303, and the memory 1304 may be connected through a bus or in another manner.

The memory 1304 may include a read-only memory and a random access memory, and provide instructions and data to the processor 1303. A part of the memory 1304 may further include a non-volatile random access memory (non-volatile random access memory, NVRAM). The memory 1304 stores a processor and operation instructions, an executable module or a data structure, a subset thereof, or an extended set thereof. The operation instructions may include various operation instructions for implementing various operations.

The processor 1303 controls an operation of the electronic device. During specific application, various components of the electronic device are coupled together through a bus system. In addition to a data bus, the bus system may further include a power bus, a control bus, a status signal bus, and the like. However, for clear description, various types of buses in the figure are all referred to as the bus system.

The method disclosed in the foregoing embodiments of this application may be applied to the processor 1303, or may be implemented by the processor 1303. The processor 1303 may be an integrated circuit chip and has a signal processing capability. In an implementation process, steps in the foregoing methods can be implemented by using a hardware integrated logic circuit in the processor 1303, or by using instructions in the form of software. The processor 1303 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware assembly.

The processor 1303 may implement or perform the methods, steps, and logic block diagrams disclosed in embodiments of this application. The general-purpose processor may be a microprocessor, or the processor may be any conventional processor or the like. Steps of the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1304, and the processor 1303 reads information in the memory 1304 and completes the steps in the foregoing methods in combination with hardware thereof.

The receiving module 1301 may be configured to receive input digital or character information, and generate a signal input related to related settings and function control of the electronic device. The sending module 1302 may be configured to output digital or character information through a first interface. The sending module 1302 may be further configured to send instructions to a disk pack through the first interface, to modify data in the disk pack. The sending module 1302 may further include a display device, for example, a display.

The electronic device provided in this embodiment of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to cause a chip in an electronic device to perform the multimedia data classification method described in the foregoing embodiments, or a chip in a training device performs the model training method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

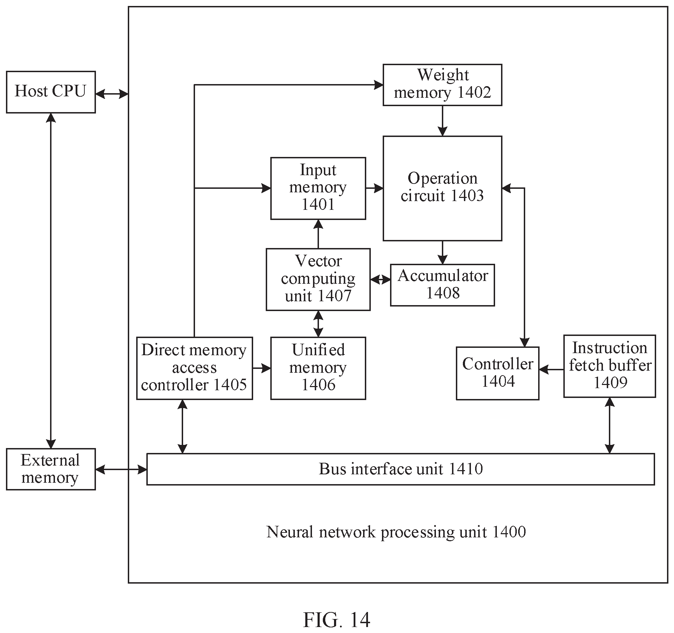

Specifically, FIG. 14 is a diagram of a structure of a chip according to an embodiment of this application. The chip may be represented as a neural network processing unit NPU 1400. The NPU 1400 is mounted to a host CPU (Host CPU) as a coprocessor, and a task is assigned by the host CPU. A core part of the NPU is an operation circuit 1403. The operation circuit 1403 is controlled by a controller 1404 to extract matrix data in a memory and perform a multiplication operation.

In some implementations, the operation circuit 1403 includes a plurality of process engines (Process Engines, PEs). In some implementations, the operation circuit 1403 is a two-dimensional systolic array. The operation circuit 1403 may be alternatively a one-dimensional systolic array or another electronic circuit capable of performing mathematical operations such as multiplication and addition. In some implementations, the operation circuit 1403 is a general-purpose matrix processor.

For example, it is assumed that there is an input matrix A, a weight matrix B, and an output matrix C. The operation circuit fetches, from a weight memory 1402, data corresponding to the matrix B, and buffers the data on each PE in the operation circuit. The operation circuit fetches data of the matrix A from an input memory 1401, to perform a matrix operation on the matrix B, and stores an obtained partial result or an obtained final result of the matrix in an accumulator (accumulator) 1408.

A unified memory 1406 is configured to store input data and output data. Weight data is directly transferred to the weight memory 1402 by using a direct memory access controller (Direct Memory Access Controller, DMAC) 1405. The input data is also transferred to the unified memory 1406 by using the DMAC.

A BIU is a bus interface unit, namely, a bus interface unit 1410, and is used for interaction between an AXI bus and the DMAC and between the AXI bus and an instruction fetch buffer (Instruction Fetch Buffer, IFB) 1409.

The bus interface unit (Bus Interface Unit, BIU) 1410 is used by the instruction fetch buffer 1409 to obtain instructions from an external memory, and is further used by the direct memory access controller 1405 to obtain original data of the input matrix A or the weight matrix B from the external memory.

The DMAC is mainly configured to transfer input data in the external memory DDR to the unified memory 1406, or transfer weight data to the weight memory 1402, or transfer input data to the input memory 1401.

A vector computing unit 1407 includes a plurality of operation processing units. If needed, further processing, for example, vector multiplication, vector addition, an exponential operation, a logarithm operation, or size comparison, is performed on an output of the operation circuit 1403. The vector computing unit 1407 is mainly configured to perform network computing, for example, batch normalization (Batch Normalization), pixel-level summation, or up-sampling on a feature plane, at a non-convolutional/fully connected layer of a neural network.

In some implementations, the vector computing unit 1407 can store a processed output vector in the unified memory 1406. For example, the vector computing unit 1407 may apply a linear function or a nonlinear function to the output of the operation circuit 1403, for example, perform linear interpolation on a feature plane extracted from a convolutional layer, and for another example, obtain a vector of an accumulated value to generate an activation value. In some implementations, the vector computing unit 1407 generates a normalized value, a value obtained through pixel-level summation, or a combination thereof. In some implementations, the processed output vector can be used as an activated input to the operation circuit 1403. For example, the processed output vector can be used at a subsequent layer in the neural network.

The instruction fetch buffer (instruction fetch buffer) 1409 connected to the controller 1404 is configured to store instructions used by the controller 1404.

The unified memory 1406, the input memory 1401, the weight memory 1402, and the instruction fetch buffer 1409 are all on-chip memories. The external memory is private for a hardware architecture of the NPU.

Any one of the processors mentioned above may be a general-purpose central processing unit, a microprocessor, an ASIC, or one or more integrated circuits for controlling program execution.

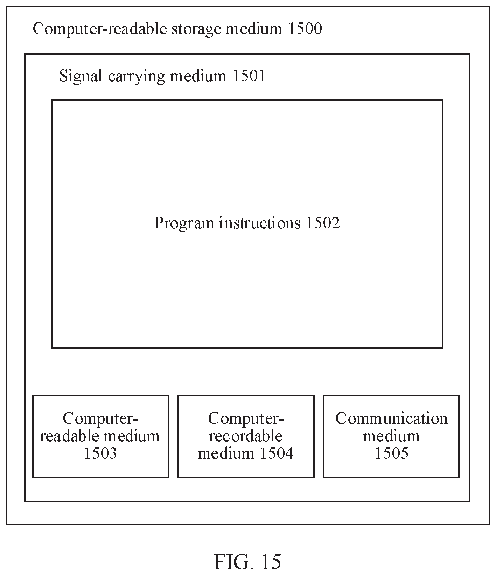

FIG. 15 is a diagram of a structure of a computer-readable storage medium according to an embodiment of this application. This application further provides the computer-readable storage medium. In some embodiments, the method disclosed in FIG. 2 or FIG. 9 may be implemented as computer program instructions encoded on the computer-readable storage medium or encoded on another non-transitory medium or product in a machine-readable format.

FIG. 15 schematically shows a conceptual partial view of an example computer-readable storage medium arranged according to at least some embodiments shown herein. The example computer-readable storage medium includes a computer program for executing a computer process on a compute device.

In an embodiment, the computer-readable storage medium 1500 is provided by using a signal carrying medium 1501. The signal carrying medium 1501 may include one or more program instructions 1502. When the program instructions are run by one or more processors, functions or a part of functions described for FIG. 2 or FIG. 9 may be provided.

In some examples, the signal carrying medium 1501 may include a computer-readable medium 1503, for example, but not limited to, a hard disk drive, a compact disc (CD), a digital video disc (DVD), a digital tape, a memory, a ROM, or a RAM.

In some implementations, the signal carrying medium 1501 may include a computer-recordable medium 1504, for example but not limited to, a memory, a read/write (R/W) CD, or an R/W DVD. In some implementations, the signal carrying medium 1501 may include a communication medium 1505, for example but not limited to, a digital and/or analog communication medium (for example, an optical fiber, a waveguide, a wired communication link, or a wireless communication link). Therefore, for example, the signal carrying medium 1501 may be conveyed by the communication medium 1505 in a wireless form (for example, a wireless communication medium that complies with the IEEE 802.X standard or another transmission protocol).

The one or more program instructions 1502 may be, for example, computer-executable instructions or logic implementation instructions. In some examples, the compute device may be configured to provide various operations, functions, or actions in response to the program instruction 1502 transmitted to the compute device by using one or more of the computer-readable medium 1503, the computer-recordable medium 1504, and/or the communication medium 1505.

It should be further noted that the apparatus embodiments described above are merely examples, and the units described as separate components may be or may not be physically separate. A component displayed as a unit may be or may not be a physical unit; and may be located in one position, or may be distributed in a plurality of network units. A part or all of the modules may be selected according to actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or a part of the foregoing embodiments may be implemented by using software, hardware, firmware, or any combination thereof. When software is used to implement the embodiments, all or a part of embodiments may be implemented in a form of a computer program product.

The computer program product includes one or more computer instructions. When computer program instructions are loaded and executed on a computer, all or a part of procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium that can be stored by the computer, or a data storage device, such as a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive, SSD)), or the like.

## Claims

1. A model training method, comprising:
obtaining multimedia data and performing extraction to obtain a feature of the multimedia data, wherein the multimedia data is training data in a training set;
separately inputting the feature of the multimedia data into a teacher network and a student network, to obtain a first feature output by the teacher network and a second feature output by the student network; and
training the student network based on a difference value between the first feature and the second feature, wherein
the difference value is used to obtain a classification result of the multimedia data, the classification result indicates whether the multimedia data is AI-generated, and a training objective of the student network is to reduce a difference between a feature output by the student network and a feature output by the teacher network when non-AI-generated multimedia data is processed, and increase a difference between a feature output by the student network and a feature output by the teacher network when AI-generated multimedia data is processed.

2. The method according to claim 1, wherein the classification result specifically indicates a probability that the multimedia data is AI-generated and a probability that the multimedia data is not AI-generated, and the probability that the multimedia data is AI-generated is positively correlated with the difference value.

3. The method according to claim 1 or 2, wherein the performing extraction to obtain the feature of the multimedia data comprises:
when the multimedia data is not AI-generated, inputting the multimedia data into a feature extraction network, to obtain the feature of the multimedia data output by the feature extraction network; or
when the multimedia data is AI-generated, inputting the multimedia data into the feature extraction network, and inputting a feature output by the feature extraction network into a feature enhancement network, to obtain the feature of the multimedia data output by the feature enhancement network.

4. The method according to claim 3, wherein the method further comprises:
alternately training the student network and the feature enhancement network in a training process of the student network, wherein a training objective of the feature enhancement network is to reduce a difference between a feature output by the student network and a feature output by the teacher network.

5. The method according to any one of claims 1 to 4, wherein the teacher network is a pre-trained neural network, and a training objective of the teacher network in a training phase is to reduce a difference between a classification result obtained based on a feature output by the teacher network and a real classification result.

6. The method according to any one of claims 1 to 5, wherein after training of the student network is completed, the method further comprises:
inputting the feature of the multimedia data into a trained student network, to obtain a third feature;
inputting a difference value between the first feature and the third feature into a classification network, to obtain a classification result output by the classification network, wherein the classification result output by the classification network indicates whether the multimedia data is AI-generated; and
training the classification network based on the classification result output by the classification network and a real classification result corresponding to the multimedia data, wherein a training objective of the classification network is to reduce a difference between the classification result output by the classification network and the real classification result.

7. The method according to any one of claims 1 to 6, wherein the multimedia data is any one of the following data: image, video, text, or voice.

8. A multimedia data classification method, comprising:
obtaining multimedia data and performing extraction to obtain a feature of the multimedia data;
separately inputting the feature of the multimedia data into a teacher network and a student network, to obtain a first feature output by the teacher network and a second feature output by the student network; and
determining a difference value between the first feature and the second feature, and inputting the difference value into a classification network, to obtain a classification result output by the classification network, wherein the classification result indicates whether the multimedia data is AI-generated.

9. The method according to claim 8, wherein the classification result specifically indicates a probability that the multimedia data is AI-generated and a probability that the multimedia data is not AI-generated, and the probability that the multimedia data is AI-generated is positively correlated with the difference value.

10. The method according to claim 8 or 9, wherein the teacher network is a pre-trained neural network, the student network is trained under guidance of the teacher network, and a training objective of the student network in a training phase is to reduce a difference between a feature output by the student network and a feature output by the teacher network when non-AI-generated multimedia data is processed, and increase a difference between a feature output by the student network and a feature output by the teacher network when AI-generated multimedia data is processed.

11. The method according to claim 10, wherein a training objective of the teacher network in a training phase is to reduce a difference between a classification result obtained based on a feature output by the teacher network and a real classification result.

12. A model training apparatus, comprising:
an extraction module, configured to obtain multimedia data and perform extraction to obtain a feature of the multimedia data, wherein the multimedia data is training data in a training set;
a processing module, configured to separately input the feature of the multimedia data into a teacher network and a student network, to obtain a first feature output by the teacher network and a second feature output by the student network; and
a training module, configured to train the student network based on a difference value between the first feature and the second feature, wherein
the difference value is used to obtain a classification result of the multimedia data, the classification result indicates whether the multimedia data is AI-generated, and a training objective of the student network is to reduce a difference between a feature output by the student network and a feature output by the teacher network when non-AI-generated multimedia data is processed, and increase a difference between a feature output by the student network and a feature output by the teacher network when AI-generated multimedia data is processed.

13. The apparatus according to claim 12, wherein the classification result specifically indicates a probability that the multimedia data is AI-generated and a probability that the multimedia data is not AI-generated, and the probability that the multimedia data is AI-generated is positively correlated with the difference value.

14. The apparatus according to claim 12 or 13, wherein the extraction module is specifically configured to:
when the multimedia data is not AI-generated, input the multimedia data into a feature extraction network, to obtain the feature of the multimedia data output by the feature extraction network; or
when the multimedia data is AI-generated, input the multimedia data into the feature extraction network, and input a feature output by the feature extraction network into a feature enhancement network, to obtain the feature of the multimedia data output by the feature enhancement network.

15. The apparatus according to claim 14, wherein the training module is further configured to alternately train the student network and the feature enhancement network in a training process of the student network, wherein a training objective of the feature enhancement network is to reduce a difference between a feature output by the student network and a feature output by the teacher network.

16. The apparatus according to any one of claims 12 to 15, wherein the teacher network is a pre-trained neural network, and a training objective of the teacher network in a training phase is to reduce a difference between a classification result obtained based on a feature output by the teacher network and a real classification result.

17. The apparatus according to any one of claims 12 to 16, wherein the training module is further configured to:
after training of the student network is completed, input the feature of the multimedia data into a trained student network, to obtain a third feature;
input a difference value between the first feature and the third feature into a classification network, to obtain a classification result output by the classification network, wherein the classification result output by the classification network indicates whether the multimedia data is AI-generated; and
train the classification network based on the classification result output by the classification network and a real classification result corresponding to the multimedia data, wherein a training objective of the classification network is to reduce a difference between the classification result output by the classification network and the real classification result.

18. A multimedia data classification apparatus, comprising:
an obtaining module, configured to obtain multimedia data and perform extraction to obtain a feature of the multimedia data; and
a processing module, configured to separately input the feature of the multimedia data into a teacher network and a student network, to obtain a first feature output by the teacher network and a second feature output by the student network, wherein
the processing module is further configured to: determine a difference value between the first feature and the second feature, and input the difference value into a classification network, to obtain a classification result output by the classification network, wherein the classification result indicates whether the multimedia data is AI-generated.

19. The apparatus according to claim 18, wherein the classification result specifically indicates a probability that the multimedia data is AI-generated and a probability that the multimedia data is not AI-generated, and the probability that the multimedia data is AI-generated is positively correlated with the difference value.

20. A model training apparatus, comprising a memory and a processor, wherein the memory stores code; the processor is configured to execute the code; and when the code is executed, the apparatus performs the method according to any one of claims 1 to 7.

21. A multimedia data classification apparatus, comprising a memory and a processor, wherein the memory stores code; the processor is configured to execute the code; and when the code is executed, the apparatus performs the method according to any one of claims 8 to 11.

22. A computer storage medium, wherein the computer storage medium stores instructions; and when the instructions are executed by a computer, the computer is caused to perform the method according to any one of claims 1 to 11.
